Europäisches Patentamt

European Patent Office

Office européen des brevets

(11) Veröffentlichungsnummer : **0 359 924 B1**

(12) **EUROPÄISCHE PATENTSCHRIFT**

(45) Veröffentlichungstag der Patentschrift :
19.11.92 Patentblatt 92/47

(51) Int. Cl.⁵ : **F16H 1/445**

(21) Anmeldenummer : **89112176.6**

(22) Anmeldetag : **04.07.89**

(54) **Sperrdifferential.**

(30) Priorität : **28.07.88 US 225426**

(43) Veröffentlichungstag der Anmeldung :
**28.03.90 Patentblatt 90/13**

(45) Bekanntmachung des Hinweises auf die
Patenterteilung :
**19.11.92 Patentblatt 92/47**

(84) Benannte Vertragsstaaten :
**DE FR GB IT**

(56) Entgegenhaltungen :
**DE-A- 1 954 534**
**US-A- 3 605 965**

(73) Patentinhaber : **DEERE & COMPANY**
**1 John Deere Road**
**Moline, Illinois 61265 (US)**

(72) Erfinder : **Stettler, Werner, Jr.**
**519 Oak Park Blvd.**
**Cedar Falls Iowa 50613 (US)**

(74) Vertreter : **Feldmann, Bernhard et al**
**DEERE & COMPANY European Office, Patent**
**Department Steubenstrasse 36-42 Postfach**
**503**
**W-6800 Mannheim 1 (DE)**

**Beschreibung**

Die Erfindung betrifft ein Sperrdifferential, insbesondere für Fahrzeuge, gemäß dem Oberbegriff des Patentanspruches 1.

In Fahrzeugen werden Differentiale verwendet, um beispielsweise Geschwindigkeitsunterschiede an den Antriebsrädern auszugleichen, die bei Kurvenfahrt auftreten. Ein Problem hierbei liegt darin, daß, wenn eines der Räder die Bodenhaftung verliert, dieses sich durchdreht, wodurch der Fahrzeugantrieb beeinträchtigt wird. Daher werden Differentiale bei Fahrzeugen, bei denen diese Gefahr besteht, z. B. Geländefahrzeuge, häufig mit einer Differentialsperre versehen, durch die wahlweise eine relative Verdrehung der Einzelteile des Differentials verhindert werden kann.

Es ist eine Vielzahl von Sperren für Differentiale bekannt. Eine gebräuchliche Sperre besteht aus einer hydraulisch betätigten Kupplung, welche bei Betätigung eine relative Verdrehung zwischen dem Differentialgehäuse und einem der Seitenzahnräder unterbindet. Derartige Kupplungen werden gewöhnlich durch einen hydraulischen Kolben betätigt, der sich mit dem Differentialgehäuse mitdreht (US-A-3 913 414). Der Nachteil einer solchen Konstruktion besteht darin, daß rotierende Dichtungen in dem den Kolben versorgenden Hydrauliksystem erforderlich sind.

Derartige drehende Dichtungen haben verschiedene Nachteile. Zum einen sind sie fast immer eine Ursache für Leckagen. Findet die Differentialsperre an einer selbständigen Achse Verwendung, die zu den übrigen Antriebsaggregaten beabstandet angeordnet ist, so müssen Maßnahmen getroffen werden, um das Lecköl wieder zum Vorratsbehälter, von dem es stammt, zurückzuführen (US-A-4 235 307). Zum anderen weisen solche Dichtungen meistens eine maximale Druckgrenze von etwa 2700 - 4100 kPa (400 - 600 psi) auf. Viele der Geländefahrzeuge sind Arbeitsfahrzeuge wie beispielsweise Ackerschlepper, Bulldozer und dergleichen, welche einen üblichen Systemdruck von etwa 15.500 kPa (2250 psi) aufweisen. Dies bedeutet, daß in der Versorgungsleitung zur Differentialsperre ein Druckreduzierventil vorgesehen werden muß.

Durch die US-A-4 644 823 und die US-A-4 679 463 werden Differentialsperren vorgeschlagen, bei denen die Leckprobleme durch die Verwendung nicht rotierender Kolben vermieden werden. Dies erfordert jedoch eine Vergrößerung des Differentialgehäuses. Ferner sind bei diesen Anordnungen spezielle Differentialgehäuse erforderlich, wodurch die Herstellungsflexibilität herabgesetzt wird.

Durch die US-A-3 605 965 ist ein gattungsgemäßes Sperrdifferential bekannt geworden. Beim Betrieb dieses Sperrdifferentials können jedoch Kräfte auf die Seitenzahnräder übertragen werden, die bestrebt sind, die Seitenräder von der Mitte des Differentials wegzudrüken. Diese Kräfte wirken sich auf die als Kupplungspaket ausgebildeten Kupplungsmittel aus, indem sie dazu neigen, das Kupplungspaket auch dann zusammen zu drücken, wenn dieses nicht durch die Betätigungsmittel zusammengepreßt wird. Hierdurch können sich die Seitenzahnräder und mit ihnen die angetriebenen Wellen bei ausgerückten Betätigungsmitteln nicht frei gegeneinander verdrehen. Ferner ist ein ständiger Verschleiß der Kupplungslamellen zu befürchten.

Aus der DE-A-1 954 534 geht ein Fahrzeugdifferential hervor, bei dem bewegliche konische Reibstücke drehfest mit den Antriebswellen verbunden sind. Beim Betrieb des Differentials werden die Reibstücke nach außen gegen entsprechende konische Reibflächen des Getriebegehäuses gedrückt und wirken somit selbstblockierend. Im Getriebegehäuse angeordnete Kolben entlasten den Eingriff der Reibräder. Der Kolben weist eine rohrförmige Verlängerung mit einem Sicherungsring auf, über den eine Feder vorgespannt wird. Im Gegensatz zum gattungsbildenden Sperrdifferential enthält das bekannte Differential eine Differentialsperre, die sich durch Betätigung der Kolben öffnen läßt.

Die mit der Erfindung zu lösende Aufgabe wird darin gesehen, ein Sperrdifferential gemäß den Merkmalen des Oberbegriffes des Patentanspruches 1 anzugeben, durch das eine axiale Verschiebung der Seitenzahnräder und eine hierdurch verursachte Beeinflussung der Kupplungsmittel vermieden wird.

Die Aufgabe wird erfindungsgemäß durch die kennzeichnenden Merkmale des Patentanspruches 1 gelöst.

Die erfindungsgemäße Lösung verhindert eine axiale Verschiebung der Seitenzahnräder in Richtung auf die Kupplungsmittel zu, wobei jedoch eine ungehinderte relative Verdrehung der Seitenräder zueinander möglich bleibt.

Die Betätigungsmittel sind drehfest im wesentlichen innerhalb des ersten Achsgehäuses angeordnet. Sie umfassen einen Druckkolben, der unmittelbar auf ein Drucklager einwirkt, welches seinerseits die Kolbenbetätigungskraft unmittelbar an die Kupplungsmittel überträgt. Kräfte des Hydraulikkolbens werden damit unter Zwischenschaltung lediglich eines Drucklagers auf die Kupplung übertragen.

Ein derartiges Sperrdifferential wird somit durch einen Hydraulikkolben betätigt, der sich nicht relativ zu den ihn umgebenden Teilen verdreht. Der Kolben liegt im wesentlichen innerhalb des Achsgehäuses, welches sich relativ zum Fahrzeug nicht verdreht. Somit können nicht auf Drehung beanspruchte Dichtungen in dem Hydrauliksystem verwendet werden. Es sind derartige Dichtungen verfügbar, die einem Druck von 15.500 kPa (2250 psi) standhalten, ohne zu lecken. Daher kann hier sowohl auf ein Druckreduzierventil als auch auf eine Ölrückflußleitung verzichtet werden.

Durch die Anordnung des Kolbens, der im wesentlichen innerhalb des Achsgehäuses untergebracht ist, läßt sich zum einen eine relativ kompakte Bauweise realisieren. Ferner läßt sich bei einer zweckmäßigen Bemessung die Differentialsperre so ausbilden, daß die einzigen Teile, die zu einem Differential hinzugefügt werden müssen, um ein Sperrdifferential zu erhalten, im wesentlichen innerhalb eines Achsgehäuses liegen. Die übrigen Teile sind die gleichen, wie bei einem nicht sperrbaren Differential oder einem Differential mit begrenztem Schlupf. Es müssen daher lediglich wenige zusätzliche Teile auf Lager gehalten werden, durch die sich eine Sonderausrüstung als wahlweise sperrbares Differential, als Differential mit begrenztem Schlupf oder als nicht sperrendes Differential verwirklichen läßt. Die Herstellungsflexibilität wird somit beträchtlich gesteigert.

Weitere vorteilhafte Ausgestaltungen und Weiterbildungen der Erfindung gehen aus den Unteransprüchen hervor.

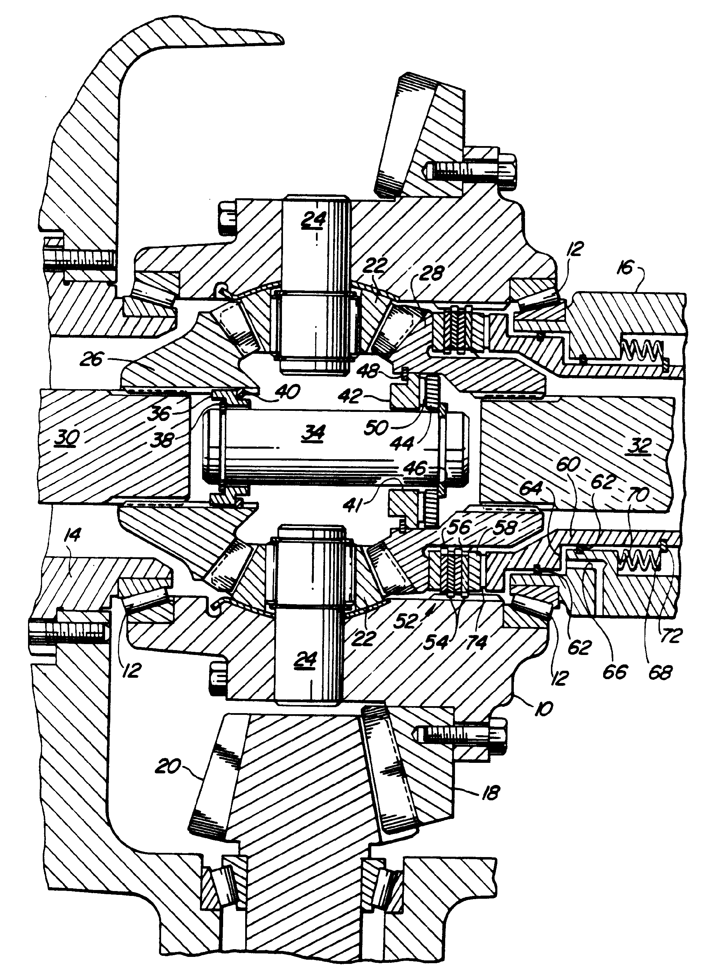

Anhand der Zeichnung, die ein Ausführungsbeispiel der Erfindung zeigt, sollen die Erfindung sowie weitere Vorteile und vorteilhafte Weiterbildungen und Ausgestaltungen der Erfindung näher beschrieben und erläutert werden.

Die einzige Figur zeigt ein Differential mit einer erfindungsgemäßen Differentialsperre im Querschnitt. Ein Differentialgehäuse 10 wird mittels Lager 12 drehbar von zwei Achsgehäusen 14, 16, welche ihrerseits am nicht dargestellten Fahrzeugrumpf befestigt sind, getragen. Ein an der Außenseite des Differentialgehäuses 10 befestigtes Tellerrad 18 wird durch ein Antriebswellenkegelrad 20, welches unmittelbar mit der nicht dargestellten Antriebsmaschine des Fahrzeuges in Verbindung steht, angetrieben. Mehrere Ausgleichskegelräder 22 sind innerhalb des Differentialgehäuses 10 über entsprechende Differentialbolzen 24 drehbar befestigt. In die Ausgleichskegelräder 22 greifen Antriebskegelräder 26, 28 ein, welche mit den Antriebswellen 30, 32 in Verbindung stehen, die ihrerseits die nicht dargestellten Antriebsräder des Fahrzeuges antreiben.

Beim Betrieb des Differentials werden die Antriebskegelräder 26, 28 axial von der Mitte des Differentials weggedrückt. Um eine axiale Verschiebung zu verhindern, wird eine Querwelle 34 verwendet. Das linke Ende der Querwelle 34 erstreckt sich durch einen Ring 36, welcher beispielsweise durch Keile drehfest mit dem Antriebskegelrad 26 verbunden ist. Die Querwelle selbst ist ebenfalls beispielsweise durch Keile drehfest mit dem Ring 36 verbunden, wobei die Keile eine hexagonale Form oder dergleichen aufweisen. Um eine Verschiebung der Querwelle 34 relativ zum Ring 36 nach rechts zu verhindern, ist ein Sicherungsring 38 vorgesehen. Der Ring 36 wird durch einen weiteren Sicherungsring 40 an einer Bewegung nach rechts relativ zu dem Antriebskegelrad 26 gehindert. Das rechte Ende der Querwelle 34 erstreckt sich durch die mittlere Öffnung 41 eines inneren Ringes 42, welcher sich mit dem Antriebskegelrad 28 mitdreht. Die mittlere Öffnung 41 in dem inneren Ring 42 ist so bemessen, daß die Querwelle 34 den Ring 42 nicht berührt. Ein äußerer Ring 44 dreht sich mit der Querwelle 34 mittels eines hexagonal geformten Keiles oder dergleichen mit. Durch einen Sicherungsring 46 wird die Querwelle 34 an einer Bewegung nach links relativ zum äußeren Ring 44 gehindert. Der innere Ring 42 wird an einer Bewegung nach links relativ zu dem Antriebskegelrad 28 durch einen Sicherungsring 48 gehindert. Schließlich ist ein Axialdrucklager 50 zwischen dem inneren Ring 42 und dem äußeren Ring 44 vorgesehen, welches vorzugsweise ein Nadellager ist. Die Wirkung dieser Konstruktion ist die, daß die Querwelle 34 verhindert, daß die Antriebskegelräder 26, 28 sich axial auseinanderschieben, wobei jedoch ihre relative Verdrehung zueinander infolge des Drucklagers 50 möglich bleibt.

Durch eine Differentialsperre läßt sich das rechtsseitige Antriebskegelrad 28 drehfest mit dem Differentialgehäuse 10 verbinden. Dies erfolgt durch eine Kupplung 52. Die Kupplung 52 enthält Trennscheiben 54, die drehfest mit dem Differentialgehäuse 10 in Verbindung stehen, und Kupplungsscheiben 56, die drehfest mit dem Antriebskegelrad 28 verbunden sind. Eine Kupplungsdruckplatte 58 ist an der rechten Seite des Kupplungspaketes 54, 56 vorgesehen.

Ein sich nicht mitdrehender Kolben 60 ist in dem sich nicht drehenden seitlichen Lagergehäuse 16 angeordnet. Dieser Kolben 60 kann grundsätzlich eine beliebige Form einnehmen, er ist jedoch vorzugsweise kreisförmig ausgebildet, um den Betätigungsdruck gleichmäßig rund um die Kupplungsdruckplatte 58 zu verteilen. Zwischen dem Kolben 60 und dem seitlichen Lagergehäuse 16 befinden sich Dichtungen 62, zwischen denen eine Hydraulikkammer 64 ausgebildet ist. Hydraulikflüssigkeit läßt sich von einer nicht dargestellten Hydraulikdruckquelle über eine Versorgungsleitung 66 zu der Hydraulikkammer 64 leiten. Die Rückstellung des Kolbens 60 läßt sich üblicherweise durch eine Kolbenrückstellfeder 68, die zwischen einer Oberfläche 70 des Lagergehäuses 16 und einem am Kolben 60 befestigten Sicherungsring 72 eingespannt ist, bewerkstelligen. Schließlich ist zwischen dem Kolben 60 und der Kupplungsdruckplatte 58 ein Drucklager 74 vorgesehen, durch das Druck von dem Kolben 60 auf die Druckplatte 58 übertragen wird, was eine relative Verdrehung dieser Teile 58, 60 zueinander ermöglicht. Das Drucklager 74 ist vorzugsweise ein Nadellager oder eine Druckscheibe. Es können aber auch andere geeignete Lager verwendet werden.

Wenn während des Betriebes die Differentialsperre betätigt werden soll, wird durch die Versorgungsleitung 66 Hydraulikflüssigkeit in die Kammer 64 gedrückt. Diese drückt den Kolben 60 gemäß der Figur nach links und drückt über die Kupplungsdruckplatte 58 und das Drucklager 74 die Trennplatten 54 und die Kupplungsscheiben 56 zusammen. Hierdurch wird eine Verdrehung der Teile des Differentials relativ zueinander verhindert. Wird die Hydraulikkammer 64 druckentlastet, so zieht die Kolbenrückstellfeder 68 den Kolben 60 von der Kupplungsdruckplatte 58 weg, so daß wieder eine relative Verdrehung der Teile des Differentials zueinander möglich wird.

Für den Fachmann erschließen sich aus der vorstehenden Beschreibung eine Vielzahl von Modifikationen der vorliegenden Erfindung. Beispielsweise kann sich der Kolben, der gemäß der Beschreibung in einem Achsgehäuse eingebaut ist, lediglich durch das Achsgehäuse erstrecken, ohne jedoch in dieses eingebaut zu sein. Ebenso kann an Stelle der Querwelle, welche eine übliche Vorrichtung zur Vermeidung von axialen Verschiebungen der Antriebskegelräder enthält, eine beliebige andere geeignete Vorrichtung verwendet werden, beispielsweise eine solche mit Lageroberflächen am Differentialgehäuse, welche Lager tragen, um die Antriebskegelräder gegen eine axiale Verschiebung zu sichern.

## Patentansprüche

1. Sperrdifferential mit einem ersten und einem zweiten nicht drehbaren Achsgehäuse (14, 16), an denen ein Differentialgehäuse (10) drehbar angebaut ist und durch die sich je eine angetriebene Welle (30, 32) in das Differentialgehäuse (10) erstreckt, mit einem ersten und einem zweiten Seitenzahnrad (26, 28), die jeweils drehfest mit einer der angetriebenen Wellen (30, 32) verbunden sind, mit mehreren Kegelrädern (22), die drehbar in dem Differentialgehäuse (10) angeordnet sind und in die Seitenzahnräder (26, 28) eingreifen, mit Kupplungsmitteln (52) zur wahlweisen Blockierung der Verdrehung wenigstens eines Seitenzahnrades (28) gegenüber dem Differentialgehäuse (10), wodurch eine Blockierung des Differentials eintritt, und mit Betätigungsmitteln zur wahlweisen Betätigung der Kupplungsmittel (52), wobei die Betätigungsmittel drehfest im wesentlichen innerhalb des ersten Achsgehäuses (16) angeordnet sind und ein Drucklager (74) zur unmittelbaren Beaufschlagung der Kupplung (52) mit Druck und einen Hydraulikkolben (60) zur unmittelbaren Beaufschlagung des Drucklagers (74) mit Druck enthalten, <u>dadurch gekennzeichnet</u>, daß sich zwischen dem ersten und dem zweiten Seitenzahnrad (26, 28) eine Querwelle (34) erstreckt, die mit dem einen Seitenzahnrad (26) hinsichtlich Verdrehung und axialer Verschiebung fest verbunden ist und mit dem anderen Seitenzahnrad (28) lediglich hinsichtlich axialer Verschiebung, nicht aber drehfest verbunden ist.

2. Sperrdifferential nach Anspruch 1, dadurch gekennzeichnet, daß das Drucklager ein axiales Nadellager (74) ist oder aus Druckscheiben besteht.

3. Sperrdifferential nach Anspruch 1 oder 2, dadurch gekennzeichnet, daß zwischen Kolben (60) und Achsgehäuse (16) eine Hydraulikkammer zum betrieb des Kolbens (60) ausgebildet ist.

4. Sperrdifferential nach Anspruch 3, dadurch gekennzeichnet, daß zur Abdichtung der Hydraulikkammer zwischen den Oberflächen des Kolbens (60) und des Achsgehäuses (16) sich nicht drehende Dichtungen (62) angeordnet sind.

5. Sperrdifferential nach einem der Ansprüche 1 bis 4, dadurch gekennzeichnet, daß Rückstellfedermittel (68) vorgesehen sind, durch die die Betätigungsmittel zur Betätigung der Kupplung (52) so vorgespannt werden, daß die Kupplung (52) entlastet ist.

6. Sperrdifferential nach einem der Ansprüche 3 bis 5, dadurch gekennzeichnet, daß der Kolben (60) einen Fortsatz enthält, der sich über die Hydraulikkammer hinaus zu der den Kupplungsmitteln (52) abgewandten Seite erstreckt und einen Sicherungsring (72) trägt, und daß wenigstens eine Feder (68) zwischen dem Sicherungsring (72) und dem Achsgehäuse (16) angeordnet und so vorgespannt ist, daß der Kolben (60) von den Kupplungsmitteln weggedrückt wird.

## Claims

1. A locking differential with first and second non-rotatable axle housings (14, 16), on to which a differential housing (10) is fitted rotatably and through each of which a driven shaft (30, 32) extends into the differential housing (10), first and second side gears (26, 28), each connected fast against rotation to one of the driven shafts (30, 32), a plurality of bevel gears (22) which are arranged rotatably in the differential housing (10) and mesh with the side gears (26, 28), clutch means (52) for selectively blocking rotation of at least one side wheel (28) relative to the differential housing (10), whereby locking of the differential results, and actuating means for selective actuation of the clutch means (52), the actuating means being arranged fast against rotation substantially within the first axle housing (16) and including a thrust bearing (74) for direct application of pressure to the clutch (52) and a hydraulic piston (60) for direct application of pressure to the thrust bearing (74), characterized in that a cross-shaft (34) extends between the first and second side gears (26, 28), this cross-shaft being connected fast against rotation and against axial displacement relative to the one side gear (26) and being connected fast against axial displacement only relative to the other side gear (28), but not fast against rotation.

2. A locking differential according to claim 1, characterized in that the thrust bearing consists of an axial needle bearing (74) or of pressure washers.

3. A locking differential according to claim 1 or 2, characterized in that a hydraulic chamber for actuating the piston (60) is formed between the piston (60) and the axle housing (16).

4. A locking differential according to claim 3, characterized in that a non-rotating seal (62) is arranged between the surfaces of the piston (60) and the axle housing (16) to seal the hydraulic chamber.

5. A locking differential according to any of claims 1 to 4, characterized by return spring means (68) though which the actuating means for actuating the clutch (52) are so biased that the clutch (52) is relieved of load.

6. A locking differential according to any of claims 3 to 5, characterized in that the piston (60) has an extension which extends beyond the hydraulic chamber out to the side facing away from the clutch means (52) and carries a retaining ring (72), and in that at least one spring (68) is arranged between the retaining ring (72) and the axle housing (16) and is so pre-stressed that the piston (60) is forced away from the clutch means.

**Revendications**

1. Différentiel à verrouillage comportant des premier et second carters d'essieux (14,16) non rotatifs, sur lesquels un carter de différentiel (10) est monté rotatif et que traversent des arbres respectifs entraînés (30,32) en pénétrant dans le carter de différentiel (10), des premier et second pignons latéraux (26,28), qui sont reliés respectivement avec blocage en rotation à l'un des arbres entraînés (30,32), plusieurs pignons coniques (22), qui sont montés rotatifs dans le carter de différentiel (10) et engrènent avec les pignons latéraux (26,28), des moyens d'accouplement (52) pour bloquer au choix la rotation d'au moins un pignon latéral (28) parallèle au carter de différentiel (10), ce qui déclenche un blocage du différentiel, et des moyens d'actionnement pour actionner au choix les moyens d'accouplement (52), les moyens d'accouplement étant montés avec blocage en rotation pour l'essentiel à l'intérieur du premier carter d'essieu (16) et contenant un palier de butée (74) servant à charger directement l'accouplement (52) avec une pression et un piston hydraulique (60) pour charger directement le palier de butée (74) avec une pression, caractérisé en ce qu'entre les premier et second pignons latéraux (26,28) s'étend un arbre transversal (34), qui est raccordé rigidement à un pignon latéral (26) du point de vue rotation et déplacement axial, et est relié à l'autre pignon latéral (28) uniquement avec possibilité de déplacement axial, mais sans blocage en rotation.

2. Différentiel à verrouillage selon la revendication 1, caractérisé en ce que le palier de butée est un roulement axial à aiguilles (74) ou est constitué par les rondelles de butée.

3. Différentiel à verrouillage selon la revendication 1 ou 2, caractérisé en ce qu'une chambre hydraulique servant à entraîner le piston (60) est formée entre le piston (60) et le carter d'essieu (16).

4. Différentiel à verrouillage selon la revendication 3, caractérisé en ce que des garnitures d'étanchéité non rotatives (62) sont prévues pour réaliser l'étanchéité de la chambre hydraulique entre les surfaces du piston (60) du carter d'essieu (16).

5. Différentiel à verrouillage selon l'une des revendications 1 à 4, caractérisé en ce qu'il est prévu des moyens formant ressorts de rappel (68), qui appliquent une précontrainte aux moyens d'actionnement servant à actionner l'accouplement (52) de sorte que ce dernier est déchargé.

6. Différentiel à verrouillage selon l'une des revendications 3 à 5, caractérisé en ce que le piston (60) contient un prolongement, qui s'étend au-delà de la chambre hydraulique en direction du côté tourné à l'opposé des moyens d'accouplement (52) et porte une bague de sécurité (72), et qu'au moins un ressort (68) est disposé entre la bague de sécurité (72) et le carter d'essieu (16) et est précontraint de telle sorte que le piston (60) est écarté des moyens d'accouplement.